# EUROPEAN PATENT APPLICATION

(11) **EP 4 818 922 A1**
(43) Date of publication of application: **07.10.2026**
(21) Application number: 25168353.8
(22) Date of filing: 03.04.2025
(51) Int. Cl.: G06F 16/2452, G06F 16/901, G06F 16/9032, G06N 5/02

(54) **SYSTEMS AND METHODS FOR ONTOLOGY-ORIENTED GRAPH DATASET MODELING, DATA RETRIEVAL, AND HYBRID STRUCTURING OF GENERATIVE ARTIFICIAL INTELLIGENCE OUTPUTS**

(71) Applicant: Koninklijke Philips N.V., 5656 AE Eindhoven (NL)
(72) Inventor: NALLURI, Joseph Jayakar, Eindhoven (NL); CHADUVULA, Siva Chaitanya, Eindhoven (NL); NOREN, David Paul, 5656AG Eindhoven (NL); KUNNIYA SREEDHARAN, Jegan, Eindhoven (NL); ZWAAN, Sergej, Eindhoven (NL); VERMA, Prateek, Eindhoven (NL)
(74) Representative: Philips Intellectual Property & Standards

(57) **Abstract**

The present disclosure relates to systems and methods for ontology-oriented graph dataset modeling, data retrieval, and hybrid structuring of generative machine learning outputs, which address the challenges of querying and extracting clinical insights from large, complex datasets. By combining knowledge graphs and large language models, embodiments of the present disclosure enable lay users to perform natural language queries on large, structured datasets and receive evidence-backed results with visual context. Embodiments include an orchestrator module powered by one or more LLMs and an instruction prompt, which selects an appropriate context retrieval tool based on a user's query. The context retrieval tool retrieves results from an ontologically-oriented graph, generates a knowledge graph, and provides a response to the query. This approach improves the efficiency and accuracy, allowing users to discover novel and unknown relationships within the dataset without needing comprehensive schema knowledge, thereby overcoming the high barrier of entry for extracting insights.

## Description

### FIELD OF THE INVENTION

The present disclosure relates generally to the structuring of large datasets and outputs in generative artificial intelligence (AI) applications, and more specifically to systems and methods for ontology-oriented graph dataset modeling, data retrieval, and hybrid structuring of machine learning outputs.

### BACKGROUND OF THE INVENTION

Large healthcare datasets, such as hospital administration data, are inherently a rich source of information and clinical insights. These datasets contain the entire patients' journey detailing every hospital visit. Every medical encounter typically contains patients' diagnoses, their in-patient or out-patient procedures, details of their stay, medications, labs and hospital charges incurred. However, healthcare data is messy and often has complex interconnected dependencies between several clinical factors. When trying to understand the pathology of a disease, the burden of illness, the outcome of an intervention, or the safety and performance of a particular device, it is critical to be able to retrieve the right medical information, collate and connect all the relevant pieces of data in a coherent clinical context, and comprehend the medical histories for multiple patients and assess this information within the scope of disease pathology, medical intervention and understanding of clinical outcomes. Such an endeavor to extract clinical insights from healthcare datasets is a daunting task and requires both technological expertise as well as clinical subject matter expertise. This creates a very high barrier entry for subject matter experts to directly interrogate these healthcare datasets and be able to extract clinical insights.

### SUMMARY OF THE DISCLOSURE

Healthcare datasets contain details about patients' clinical journeys that document hospital visits, diagnoses, procedures, labs, vitals, devices etc. Deducing clinical insights require subject matter expertise and technical prowess to query such structured datasets which present a high barrier of entry for interrogating these datasets for many users. That is, for vast and complex datasets, lay users cannot explore (or query further than) what they do not know. Without the knowledge of the entire data schema/model, the user is limited to asking basic questions and receives only the most basic result of their query. This is not helpful for learning or exploring the connections within the dataset. To resolve this, the present disclosure offers systems and methods that combine knowledge graphs and large language models to allow improved exploration of large datasets for such users. More specifically, the systems and methods of the present disclosure address and improve upon a number of technical aspects of this field by enabling lay users to query a structured dataset via natural language querying and receive an evidence-backed result accompanied by corroborating facts, along with a visualized context that guide prompting. As described herein, the systems and methods of the present disclosure address a number of technical challenges, including: (1) lay users cannot directly query a structured data source, and receive evidence-backed results along with enhanced context; (2) prompting is critical during invoking any generative AI tool, but lay users may not be proficient at prompting without expert knowledge of the data or the underlying data schema/model; (3) hallucination is unavoidable while invoking a generative AI tool and even expert users may not be able to determine how accurate the responses are without also knowing the ground truth simultaneously.

According to one embodiment of the present disclosure, a system for ontology-oriented dataset modeling, data retrieval, and exploration is provided. The system can include one or more processors and one or more computer-readable storage media, the one or more computer-readable storage media having stored thereon computer-readable instructions that, when executed by at least one of the one or more processors, causes the system to perform the following operations: receiving, at an orchestrator module comprising an LLM-powered agent and an instruction prompt, a natural language query concerning a structured dataset; selecting, by the orchestrator module, a context retrieval tool from available context retrieval tools to use on the structured dataset based on the natural language query and the instruction prompt; retrieving, using the selected context retrieval tool, results from the structured dataset based on the natural language query; generating, using the selected context retrieval tool, a knowledge graph for the natural language query based on the structured dataset and the results retrieved; generating, using the LLM-powered agent at the orchestrator module, a response to the natural language query based on the results retrieved for the natural language query; and providing, via a user device, the response to the natural language query and the knowledge graph generated for the natural language query.

In an aspect, the structured dataset can be a graph database comprising: a plurality of nodes, each node representing a predetermined data element for the given structured dataset; and a plurality of edges relating various nodes of the plurality of nodes, wherein each edge connects exactly two nodes of the plurality of nodes and defines a relationship type between the two nodes.

In an aspect, each data element for a given node comprises one or more node properties, wherein each edge between two connected nodes comprises a context property that embeds the node properties of the two connected nodes, and wherein the context property is a natural language representation of the node properties of the two connected nodes.

In an aspect, the structured dataset can be a vector database and the context property of each edge of the plurality of edges is stored in the vector database as a numeric vector. The structured dataset can further include a vector index for each context property of each edge of the plurality of edges.

In an aspect, the selected context retrieval tool retrieves the results from the structured dataset by: converting the natural language query into a numeric vector query; comparing the numeric vector query to the vector indexes of the structured dataset; and returning context properties corresponding to the *k* most similar vector indexes, wherein *k* is an integer greater than 0.

In an aspect, the knowledge graph generated for the natural language query includes a network of nodes and edges identified while retrieving the results from the structured dataset.

In an aspect, the knowledge graph is provided via the user device in a human-readable text-based format, and/or the knowledge graph is provided via the user device in a human-readable graphical format.

In an aspect, the response to the natural language query and the knowledge graph generated for the natural language query are provided concurrently.

According to another embodiment of the present disclosure, a data storage and retrieval system for a non-transitory computer-readable memory is provided. The system can include one or more processors for configuring the non-transitory computer-readable memory according to an ontology-oriented graph database. The ontology-oriented graph database can include: a plurality of nodes, each node representing a predetermined data element for a given structured dataset, wherein each node comprises one or more node properties; a plurality of edges relating various nodes of the plurality of nodes, wherein each edge connected exactly two nodes of the plurality of nodes and defines a relationship type between the two nodes; wherein each edge between two connected nodes comprises a context property that embeds the one or more node properties of the two connected nodes, the context property being a natural language representation of the node properties of the two connected nodes.

In an aspect, the ontology-oriented graph database can be a vector database, wherein the context property of each edge of the plurality of edges is stored in vector database as a numeric vector.

In an aspect, the ontology-oriented graph database can further include a vector index for each context property of each edge of the plurality of edges.

According to another embodiment of the present disclosure, a method of storing and retrieving information from a structured dataset is provided. The method can include: receiving, at an orchestrator module comprising an LLM-powered agent and an instruction prompt, a natural language query concerning the structured dataset; selecting, by the orchestrator module, a context retrieval tool from available context retrieval tools to use on the structured dataset based on the natural language query and the instruction prompt; retrieving, using the selected context retrieval tool, results from the structured dataset based on the natural language query; generating, using the selected context retrieval tool, a knowledge graph for the natural language query based on the structured dataset and the results retrieved; generating, using the LLM-powered agent at the orchestrator module, a response to the natural language query based on the results retrieved for the natural language query; and providing, via a user device, the response to the natural language query and the knowledge graph generated for the natural language query.

In an aspect, the structured dataset can be an ontology-oriented graph database stored in non-transitory computer-readable storage media, the ontology-oriented graph database comprising: a plurality of nodes, each node representing a data element from the given structured dataset, wherein each node comprises one or more node properties; a plurality of edges relating various nodes of the plurality of nodes, wherein each edge connected exactly two nodes of the plurality of nodes and defines a relationship type between the two nodes; wherein each edge between two connected nodes comprises a context property that embeds the one or more node properties of the two connected nodes, the context property being a natural language representation of the node properties of the two connected nodes

In an aspect, the ontology-oriented graph database can be a vector database, wherein the context property of each edge of the plurality of edges is stored in vector database as a numeric vector.

In an aspect, the ontology-oriented graph database can further include a vector index for each context property of each edge of the plurality of edges.

These and other aspects of the various embodiments will be apparent from and elucidated with reference to the embodiments described hereinafter.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the various embodiments.
Fig. 1 is a functional block diagram of a system for storing and retrieving information from a structured dataset illustrated in accordance with aspects of the present disclosure.
Fig. 2 is a diagram of a knowledge graph illustrated in accordance with aspects of the present disclosure.
Fig. 3 is another diagram of the knowledge graph illustrated in accordance with aspects of the present disclosure.
Fig. 4 is still another diagram of the knowledge graph illustrated in accordance with aspects of the present disclosure.
Fig. 5 is a diagram of a single node pair with edge embedded properties illustrated in accordance with aspects of the present disclosure.
Fig. 6 is a diagram illustrating the conversion of context properties in a two-dimensional knowledge graph into a multi-dimensional vector space.
Fig. 7 is a diagram illustrating the various context properties represented in multi-dimensional vector space.
Fig. 8 is a diagram illustrating a chain of three nodes with natural language context properties embedded.
Fig. 9 is a diagram illustrating the chain of three nodes with context properties represented by a numerical vector in multi-dimensional space.
Fig. 10 is an illustration showing the graphical user interface generated in accordance with aspects of the present disclosure.
Fig. 11 is a block diagram illustrating a computing device in accordance with aspects of the present disclosure.
Fig. 12 is a flowchart illustrating a method of storing and retrieving information from a structured dataset in accordance with aspects of the present disclosure.
Fig. 13 is a diagram illustrating a reinforcement learning approach for training and improving the LLMs of the present disclosure.
Fig. 14 is another diagram illustrating a reinforcement learning approach for training and improving the LLMs of the present disclosure.

### DETAILED DESCRIPTION OF EMBODIMENTS

This disclosure presents systems and methods for ontology-oriented graph dataset modeling, data retrieval, and hybrid structuring of machine learning outputs. These innovations allow users to query structured datasets in natural language and receive evidence-backed results with visual context. The solutions address a number of technical challenges, including: enabling lay users to query complex data without comprehensive schema knowledge; improving prompt generation for AI tools; and reducing / minimizing the issue of AI hallucination by providing accurate, evidence-based responses. Although certain embodiments described herein relate to patient-centric datasets, it should be appreciated that other and/or additional types of datasets may be utilized, such as non-patient information related to medical device manufacturers, non-patient information related to particular clinics or hospitals, non-patient marketing information, workforce-related information, among many others.

In the first aspect of the invention, a system for querying a structured data source is disclosed, the system comprises one or more processors adapted to: receive, at an orchestrator module comprising a large language model (LLM)-powered agent and an instruction prompt, a natural language query concerning a structured dataset; select, by the orchestrator module, a context retrieval tool from available context retrieval tools, the context retrieval tool adapted to be used on the structured dataset and further adapted to carry out the natural language query and the instruction prompt; retrieve, using the selected context retrieval tool, results from the structured dataset based on the natural language query; generate, using the selected context retrieval tool, a knowledge graph for the natural language query based on the structured dataset and the results retrieved from the structured dataset; generate, using the LLM-powered agent, a response to the natural language query based on the results retrieved for the natural language query. In some embodiments, a user device is provided, to display the response to the natural language query and the knowledge graph generated for the natural language query.

In some embodiments, structured dataset is a graph database comprising a plurality of nodes (202), the nodes (202) representing a predetermined data element for the structured dataset (130) and/or a plurality of edges (204) relating at least some nodes of the plurality of nodes (202), wherein the edges (204) connect at least two nodes of the plurality of nodes (202) and define a relationship type between the two nodes.

In some embodiments, a system is disclosed, wherein the predetermined data element for a given node comprises one or more node properties, wherein the edges between two connected nodes comprises a context property that embeds the node properties of the two connected nodes, and wherein the context property is a natural language representation of the node properties of the two connected nodes. In some embodiments, the structured dataset can a vector database and the context property of the plurality of edges is stored in the vector database as a numeric vector. The structured dataset can further comprise a vector index for each context property of the plurality of edges.

In some embodiments, the selected context retrieval tool retrieves the results from the structured dataset by converting the natural language query into a numeric vector query and/or comparing the numeric vector query to the vector indexes of the structured dataset and/or and returning context properties corresponding to the *k* most similar vector indexes, wherein *k* is an integer greater than 0.

In some embodiments, the knowledge graph generated for the natural language query includes a network of nodes and edges identified while retrieving the results from the structured dataset. wherein at least one of: the knowledge graph is provided via the user device in a human-readable text-based format; and/or the knowledge graph is provided via the user device in a human-readable graphical format. In some embodiments, the response to the natural language query and/or the knowledge graph generated for the natural language query are provided concurrently.

In another aspect, a data storage and retrieval system (100A) is disclosed, the system comprising one or more processors for configuring an ontology-oriented graph database, the ontology-oriented graph database comprising a plurality of nodes, each node of the plurality of nodes representing a predetermined data element for a given structured dataset, wherein each node of the plurality of nodes comprises one or more node properties; a plurality of edges relating each node of the plurality of nodes, wherein each edge of the plurality of edges connects at least two nodes of the plurality of nodes and defines a relationship type between the at least two nodes. In some embodiments, each edge between the at least two connected nodes comprises a context property that embeds the one or more node properties of the at least two connected nodes, the context property being a natural language representation of the node properties of the at least two connected nodes.

In some embodiments, the ontology-oriented graph database is a vector database, and/or the context property of each edge, or at least some of the edges, or at least one edge, of the plurality of edges is stored in vector database as a numeric vector. In some embodiments, the ontology-oriented graph database further comprises a vector index for each or at least some of the context properties of each or at least some of the edges of the plurality of edges.

In another aspect, A computer-implemented method of storing and retrieving information from a structured dataset is described. The method comprising: receiving, at e.g. an orchestrator module comprising a large language model (LLM)-powered agent and an instruction prompt, a natural language query concerning the structured dataset; selecting, by the orchestrator module, a context retrieval tool from available context retrieval tools, the context retrieval tool adapted to be used on the structured dataset based on the natural language query and adapted carry out the instruction prompt; retrieving, using the selected context retrieval tool, results from the structured dataset based on the natural language query; generating, using the selected context retrieval tool, a knowledge graph for the natural language query based on the structured dataset and the results retrieved from the structured dataset. In some embodiments, further generating, using e.g. the LLM-powered agent at the orchestrator module, a response to the natural language query based on the results retrieved for the natural language query. In some further embodiments, providing, via a user device (e.g., monitor, display, hand-held device), the response to the natural language query and the knowledge graph generated for the natural language query.

In some embodiments, the structured dataset can be e.g. an ontology-oriented graph database. In the example of the ontology-oriented graph database, the following steps can be carried out by the method: a plurality of nodes, the nodes representing a data element from the structured dataset, wherein each node of the plurality of nodes comprises one or more node properties; a plurality of edges relating at least some nodes of the plurality of nodes, wherein the edges connect at least two nodes of the plurality of nodes and defines a relationship type between the two nodes. In some embodiments, the edges between two connected nodes comprise a context property that embeds the one or more node properties of the two connected nodes, the context property being a natural language representation of the node properties of the two connected nodes. In some embodiments, the ontology-oriented graph database is a vector database, and wherein the context property of each edge of the plurality of edges is stored in vector database as a numeric vector.

Further, a computer program or computer program product comprising instructions which, when the program is executed by a computer, cause the computer to carry out the method of any one of embodiments of the present invention.

Further, the invention will be described with respect to figures and further embodiments.

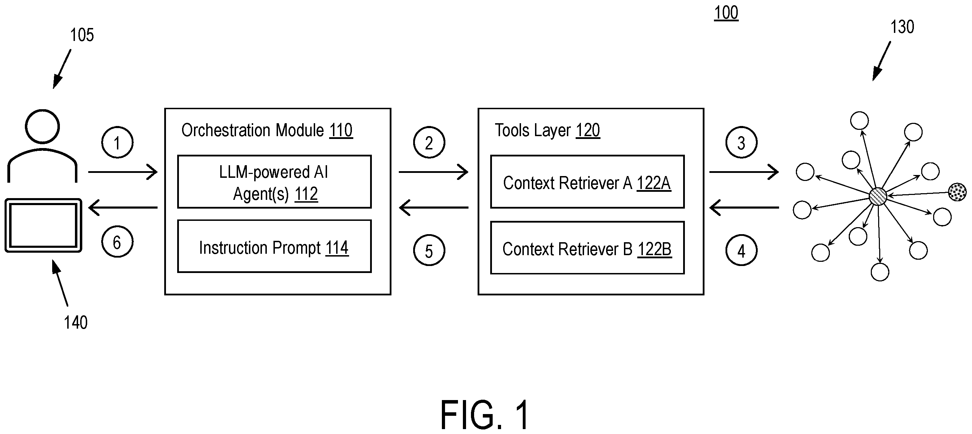

With reference to Fig. 1, a functional diagram of a system 100 for storing and retrieving information from a structured dataset is illustrated according to certain aspects of the present disclosure. As shown, the system 100 can include an orchestration module 110, a context retrieval tools layer 120, and a storage layer comprising a structured dataset 130. In particular, each of the orchestration module 110, context retrieval tools layer 120, and the storage layer may be implemented using a combination of computer processors and computer-readable storage media, various embodiments of which are described in more detail below. In some embodiments, the orchestration module 110, context retrieval tools layer 120, and the storage layer may be implemented using one or more separate subsystems or devices. In further embodiments, one or more of the orchestration module 110, context retrieval tools layer 120, and the storage layer may be implemented together using the same hardware.

In embodiments, the orchestration module 110, sometimes referred to as the orchestrator or an orchestration module, includes one or more large language model (LLM)-powered artificial intelligence (AI) agents 112 configured to receive and process natural language queries from a user 105. In embodiments, the LLM-powered agent 112 may include or otherwise utilize at least one LLM. In some embodiments, the LLM-powered agent 112 may comprise or otherwise utilize multiple LLMs and/or other ML models, i.e., an ensemble. The LLMs and/or other ML models may be trained or untrained, or a combination thereof, and may be trained using reinforcement learning as described in more detail below. In embodiments, the LLM-powered agent 112 may be rotated or substituted depending on a number of factors, such as the language and content of the query, performance statistics, and user feedback, among other factors.

In specific embodiments, the LLM-powered agent 112 can include or otherwise utilize one or more of the following LLMs:

**Table 1. LLM Leader Board**

| **Model_id** | **tool_name** | **n_attempts** | **n_success** |
|---|---|---|---|
| anthropic.claude-v2 | Encounter Retriever | 4 | 1.75 |
| cohere.command-text-v14 | Encounter Retriever | 65 | 2.14 |
| cohere.command-text-v14 | Question Classifier | 23 | 5.74 |
| anthropic.claude-v2 | Question Classifier | 38 | 6.05 |
| cohere.command-text-v14 | Question Decomposer | 31 | 4.06 |
| anthropic.claude-v2 | Question Decomposer | 40 | 4.2 |
| cohere.command-text-v14 | Text2Cypher | 39 | 0.67 |
| anthropic.claude-v2 | Text2Cypher | 110 | 0.96 |

As discussed in more detail below, the LLM-powered agent 112 and the collection of LLMs shown in Table 1 (i.e., the LLM Leader Board) may be dynamically utilized within the system 100 based on various forms of feedback. In particular, it is appreciated that most LLMs are developed for general-purpose use or a wide range of functions (e.g., classification, data filtering, writing code, etc.), and therefore they lack domain expertise having never been trained on the data specific to a particular application. This poses room for LLMs to hallucinate and make mistakes. Thus, according to the present disclosure, the LLM-powered agent 112 may be trained using reinforcement learning to eventually select and develop the best performing models.

As also shown in the example of Fig. 1, the orchestration module 110 also includes an instruction prompt 114. The instruction prompt 114 includes a set of guidelines or directives that the LLM-powered agent 112 can use to re-structure the query from the user, to select the best context retrieval tool from the available context retrieval tools, and/or to generate the best response to the user's query based on the results returned by the context retrieval tool(s). In embodiments, the instruction prompt 114 can include specific tasks, desired tone, formatting rules, and any other relevant instructions to ensure the AI's output aligns with the user's expectations.

The instruction prompt 114 can be application specific, or may be specific to the particular structured dataset. For example, a portion of an exemplary instruction prompt 114 for a patient healthcare dataset is shown in the table below:

**Table 2. Excerpt of Exemplary Instruction Prompt**

| |
|---|
| You are an expert data analyst who can answer complex questions regarding patients, hospital encounters, diagnoses, procedures, etc. |
| DO NOT INCLUDE ANY SUGGESTIONS OR RECOMMENDATIONS IN YOUR RESPONSE. SIMPLY PROVIDE THE INFORMATION REQUESTED. |
| Example questions when Tool A is the correct tool to answer are as follows: |
| * What is the most common diagnosis code? |
| * Give me the demographic breakdown for all those who received an intracardiac procedure |
| Example questions when Tool B is the correct tool to answer are as follows: |
| * Describe the typical characteristics of a patient who had used Philips glidelight device |
| Example questions when Tool C is the correct tool to answer are as follows: |
| * which encounters have a diagnosis of bacteremia present on admission? |
| Example questions when Tool D is the correct tool to answer are as follows: |
| * What encounters where procedure had a lead addition without lead removal? |
| * Give me a list of patients with encounters with procedures with CIED lead extraction |
| Example questions when Tool E is the correct tool to answer are as follows: |
| * What are the most common medications seen in patients using glidelight device? |
| In this dataset, you have patients treated with cardiovascular procedures that use glidelight, tightrail. The description of these devices are as follows: |
| Notes: |
| * GlideLight laser sheath offers the unprecedented ability to customize the laser's repetition rate throughout a procedure. It is used to safely and efficiently remove the leads... |

In embodiments, the orchestration module 110 can be configured to assess the queries from a user 105 using the LLM-powered agent 112 and, based on the instruction prompt 114, select the most appropriate context retrieval tool among available context retrieval tools (e.g., context retrieval tools 122A, 122B, etc.). That is, as described herein, the orchestration module 110 can be a generative AI agent configured to assess queries from a user 105 and configured to invoke an appropriate context retrieval tool 122A, 122B from available tools.

In embodiments, each of the available tools 122A, 122B may include a tool description that informs the orchestration module 110 which tool 122A, 122B to use for different situations. For example, a pseudo-code for a portion of an exemplary tool description file is reproduced in the table below:

**Table 3. Tool Description File**

| |
|---|
| Function **Tool_Name:** |
| **name** = "Encounter Diagnoses Tool" |
| **description** = """This tool retrieves diagnoses information for a given patient encounter. |
| It fetches details about the diagnoses made during the encounter, including diagnosis codes and descriptions. |
| Use this tool to get detailed information about the diagnoses associated with a specific encounter. |
| Do not use this tool for retrieving other types of information such as procedures or patient demographics.""" |
| ... |

Thus, the orchestration module 110 may also use this tool description file to understand and subsequently employ the most appropriate context retrieval tool 122A, 122B among the available tools. In embodiments, each of the context retrieval tools 122A, 122B is configured to fetch the relevant information and corresponding supporting facts from the structured dataset and return those results to the orchestration module 110. In particular embodiments, the available tools may include at least one context retrieval tool 122A, 122B corresponding to each of the unique relationships defined within the structured dataset 130. For example, the exemplary structured dataset described below has five unique relationships (i.e., *has_encounter, has_diagnosis, has_icd_procedure, has_cpt_procedure, has_charge*), and therefore the tools layer 120 may include five tools (e.g., tools 122A, 122B) corresponding to a respective relationship.

However, the number and types of tools need not be limited by the number of relationship types. In embodiments, the tools 122A, 122B can also include general tools, such as a statistical calculator, a web searcher, or specific tools configured to identify certain conditions or categories of conditions (e.g., infection, etc.) and/or tools configured to identify the use of specific medical devices or instruments in connection with a particular patient, encounter, etc.

As described, the context retrieval tools 122A, 122B may be contained in a tools layer 120, which may be implemented separately or together with the orchestration module 110. That is, the context retrieval tool 122A, 122B selected at the orchestration module 110 may be implemented on separate hardware from the hardware used to implement the orchestration module 110. However, it is also contemplated that these layers 110, 120 may be implemented using the same hardware.

Accordingly, the selected context retrieval tool 122A, 122B may be configured to results from the structured dataset 130 based on the natural language query received from the user 105. In embodiments, the capability of the context retrieval tools 122A, 122B may depend on the structured dataset 130, including the specific structure of the structured dataset 130 as well as the content stored within the structured dataset 130.

As described herein, the structured dataset 130 is a graph database, which is a specialized type of database designed to store and query graph structures efficiently. Unlike traditional relational databases that use tables, graph databases use nodes, edges, and properties to represent and store data. Thus, in embodiments, the structured dataset 130 is a graph structure comprising a plurality of nodes and a plurality of edges. Each node of the plurality of nodes can represent a data element within the given structured dataset 130, while each edge of the plurality of edges connects different nodes and defines a particular relationship between the connected nodes. According to the present disclosure, each edge of the structured dataset 130 may connect exactly two nodes of the plurality of nodes.

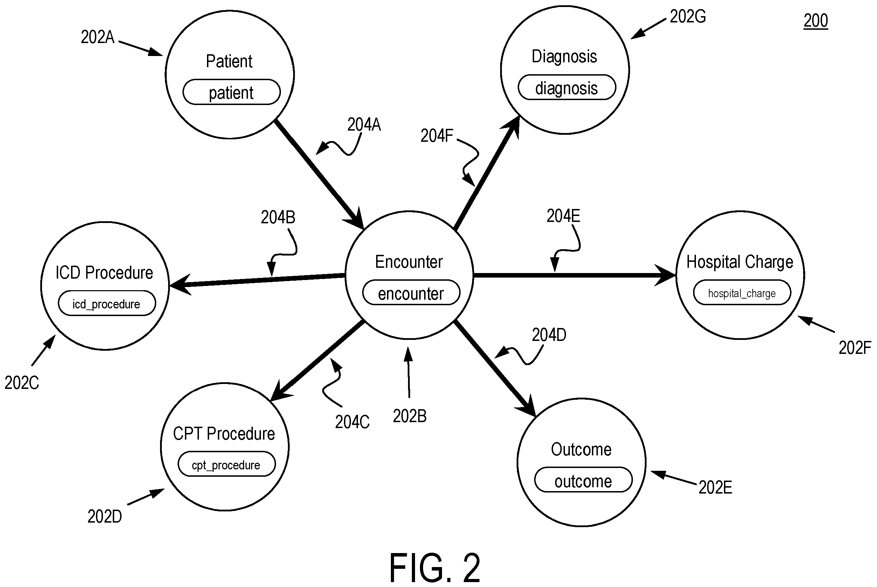

Additional details of the structured dataset 130 and the capabilities of the context retrieval tools 122A, 122B are described in connection with reference to Figs. 2 through 9. In particular, it should be appreciated that methods of generating a structured dataset 130 are also described. Although the following description focuses on a patient-centered dataset, it should be appreciated that other data elements and relationships may be defined based on the underlying data and the intended purpose of the system 100. For example, additional data elements and relationships may be derived from, for example, clinical data, hospital administrative data, and/or the like.

As shown in the example of Figs. 2 through 4, the general structure of a dataset 130 modeled as a knowledge graph 200 is illustrated, data is stored as nodes, edges, and properties. This particular knowledge graph 200 includes a plurality of nodes 202A-G and a plurality of edges 204A-F. Each of the nodes 202A-G correspond to a respective data elements, e.g., 'Patient', 'Encounter', 'ICD Procedure', 'CPT Procedure', 'Outcome', 'Hospital Charge', and 'Diagnosis'. In further embodiments, the graph 200 can be modified by, for example, embedding a time series aspect among encounters through an additional relationship (i.e., "followed_by"). The graph 200 can also be augmented by directed relationships between nodes.

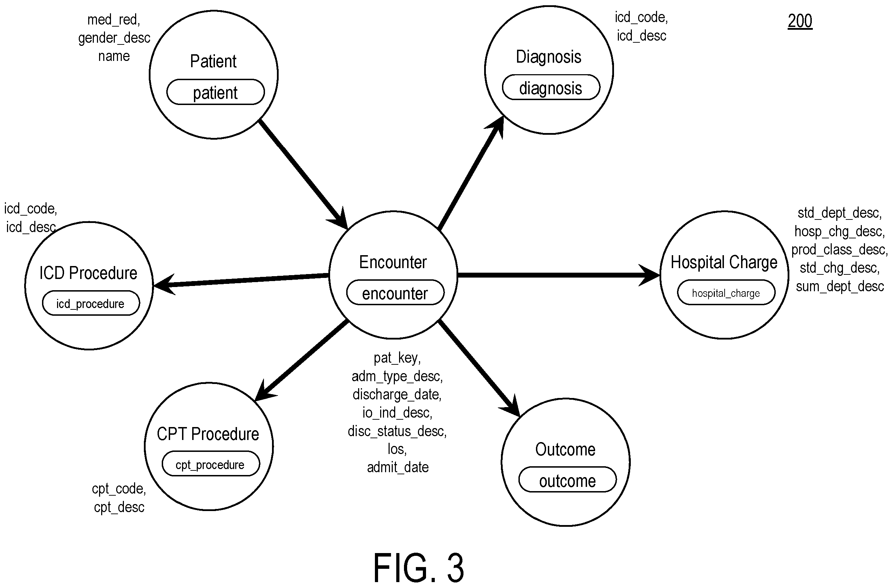

As shown in the example of Fig. 3, each of the nodes 202A-G contains one or more node properties. A node property can comprise a property label and a property value. For this exemplary dataset 130, the nodes 202A-G may define at least the following node properties:

**Table 4. Node Descriptions and Properties**

| **Node / Data Element** | **Node Property (Label)** | **Example Value** |
|---|---|---|
| **Patient** | patient | 4:fb718daa-5aa2-4fee-b4fc-e6106e750bec:274 |
| | Med_red | 93098057 |
| | Gender_desc | Male |
| | Name | 93098057 |
| **Encounter** | Encounter | 4:fb718daa-5aa2-4fee-b4fc-e6106e750bec:25 |
| | Pat_key | 1456763970 |
| | Adm_type_desc | URGENT |
| | Discharge_date | 2021-11-03 |
| | Io_ind_desc | Inpatient |
| | Disc_status_desc | DISCHARGED/TRANSFERRED TO OTHER FACILITY |
| | Los | 10 |
| | Admit_date | 2021-10-19 |
| **ICD Procedure** | Icd_procedure | 4:fb718daa-5aa2-4fee-b4fc-e6106e750bec:182 |
| | Icd_code | B51M1ZA |
| | Icd_desc | FLOROS R UP EXTRM VN LO OSM GUIDANC |
| **CPT Procedure** | Cpt_procedure | 4:fb718daa-5aa2-4fee-b4fc-e6106e750bec:1844 |
| | Cpt_code | J0690 |
| | Cpt_desc | INJECTION CEFAZOLIN SODIUM 500 MG |
| **Outcome** | Outcome | 4:fb718daa-5aa2-4fee-b4fc-e6106e750bec:411876 |
| **Hospital Charge** | Hospital_charge | 4:fb718daa-5aa2-4fee-b4fc-e6106e750bec:17 |
| | department_description | PHARMACY |
| | charge_master_description | MULTIVIT TAB |
| | charge_item_description | THERAPEUTIC MULTIVITAMIN |
| | charge_item_id | 4724311 |
| | clinical_summary_description | MULTIVITAMINS ORAL |
| **Diagnosis** | Diagnosis | 4:fb718daa-5aa2-4fee-b4fc-e6106e750bec:513 |
| | Icd_code | E2749 |
| | Icd_desc | OTH ADRENOCORTICAL INSUFF |
| | Icd_version | 10 |

Although certain data elements and node properties are described, it should be appreciated that additional types of data elements and additional node properties may be created and used as needed. Similarly, fewer types of data elements and node properties may be used.

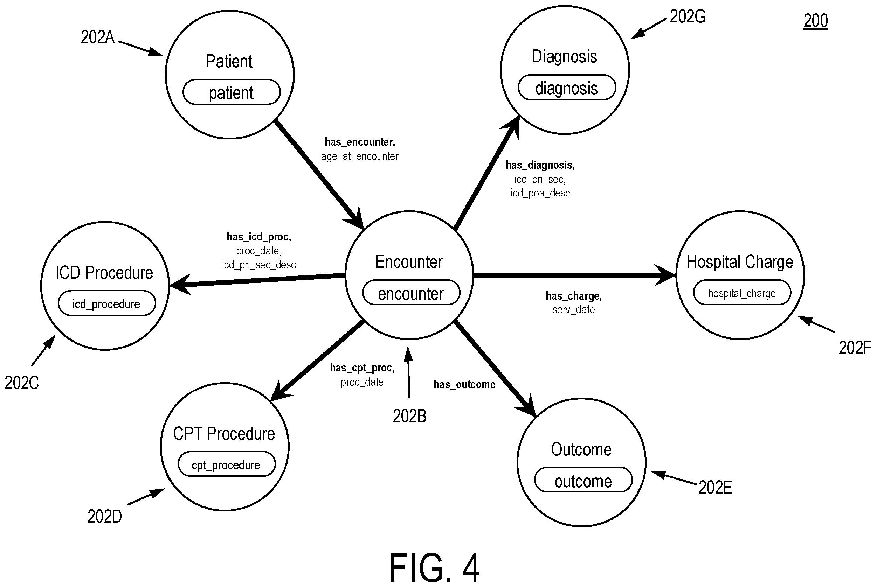

As shown in the example of Fig. 4, each of the edges 204A-F relate various nodes of the plurality of nodes 202A-G. More specifically, each of the edges 204A-F connects exactly two nodes 202A-G of the plurality of nodes 202A-G and defines a relationship type between the two connected nodes 202A-G. In embodiments, the relationship type may be one of a number of pre-defined relationships, which can include parameters of different types as well as directedness. According to the embodiment illustrated, the following relationships are pre-defined for the dataset:

**Table 5. Edge Relationships**

| **Edge** | **Relationship Label** |
|---|---|
| **Patient - Encounter** | Has_encounter |
| **Encounter - ICD Procedure** | Has_icd_proc |
| **Encounter - CPT Procedure** | Has_cpt_proc |
| **Encounter - Outcome** | Has_outcome |
| **Encounter - Hospital Charge** | Has_charge |
| **Encounter - Diagnosis** | Has_diagnosis |

As also shown in the example of Fig. 4, each edge 204A-F of the plurality of edges 204A-F can also contain one or more edge properties. Each edge property may have a label and a value. For example, exemplary edge properties are illustrated in FIG. 4 and described in the table below:

**Table 6. Edge Properties**

| **Edge** | **Edge Property (Label)** | **Example Value** |
|---|---|---|
| **Patient - Encounter** | Age_at_encounter | 36 |
| **Encounter - ICD Procedure** | Proc_date | 2018-02-08 |
| | Icd_pri_sec_desc | Secondary |
| **Encounter - CPT Procedure** | Proc_date | 2019-09-23 |
| **Encounter - Outcome** | Severity | Normal/Adverse |
| **Encounter - Hospital Charge** | Serv_date | 2021-10-31 |
| **Encounter - Diagnosis** | Icd_pri_sec | Secondary |
| | Icd_poa_desc | Exempt from POA reporting |

Although certain edges, relationships, and edge properties are described herein, it should be appreciated that additional edges, relationships, and edge properties may be created and used as needed. Similarly, fewer types of edges, relationships, and edge properties may be used as needed.

In addition to the edge properties described above, the structured dataset 130 (i.e., the graph database) can also include a context property embedded into each of the plurality of edges 204A-F. In embodiments, the context property of an edge connecting two nodes embeds a combination of the node properties of the two connected nodes. In some embodiments, a context property may embed a combination of all of the available node properties of the two connected nodes. In further embodiments, a context property may embed a subset of the available node properties of the two connected nodes.

In particular embodiments, the context property of a respective edge 204A-F consists of a natural language representation of at least some of the node properties of the two nodes 202A-G connected by the respective edge 204A-F. That is, the context property adds natural language context on every relationship within the graph 200. In certain embodiments, a template may be created and used for generating the natural language context on every relationship within the graph 200. For example, each potential relationship type that can exist between two node types may have its own template that determines how the natural language context is generated.

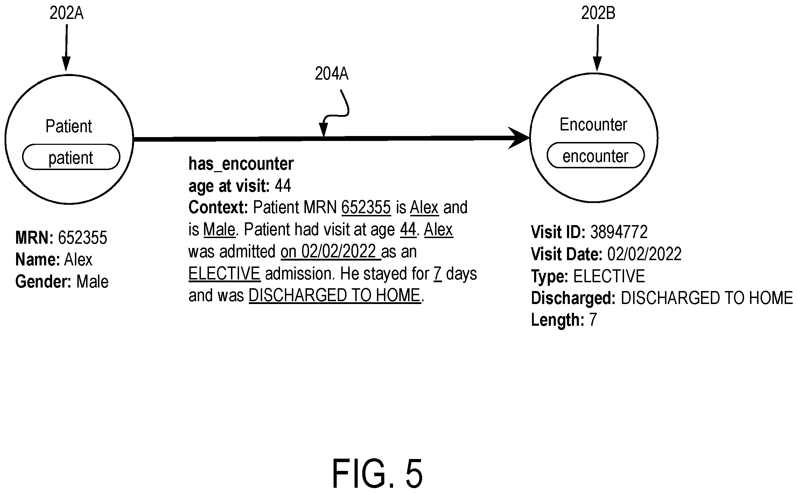

With reference to Fig. 5, an exemplary context property of the edge 204A connecting node 202A and node 202B is illustrated in accordance with aspects of the present disclosure. As shown, on the relationship 'has_encounter', there is a context property that embeds the properties of source node 'Patient' and target node 'Encounter' and details the nature of interaction between the nodes pertaining to the individual data elements. This context property wraps the facts (i.e., individual node properties) into an information that is ontologically accurate and human readable. Because relationships can only exist between two nodes, the context property thereby captures the unique relationship between them. Thus, adding such a property of context between all the nodes of the data model 200, makes it a native and fundamental feature of the data model 200.

In embodiments, the context property may not be native to the underlying dataset. For example, if a relational database containing medical records for a plurality of patients is used to generate the structured dataset 130 (i.e., in the form of the graph database according to the knowledge graph 200), the relational database may not include the context property. In other words, when creating the structured dataset 130 (i.e., graph database), the context property may be generated using machine learning (e.g., an LLM) and then embedded into each edge of the plurality of edges 204A-F.

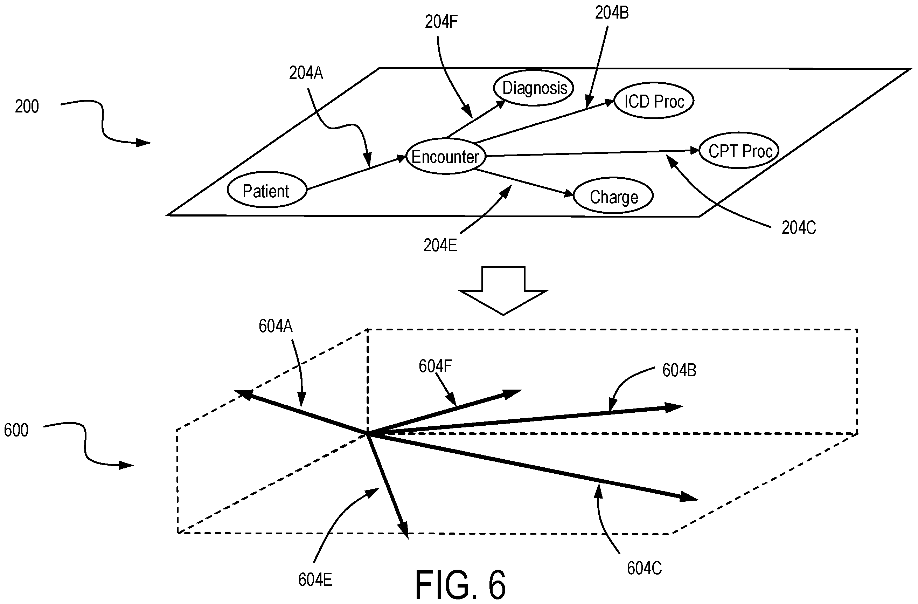

Once a context property is generated for each of edges 204A-F of the plurality of edges 204A-F within the structured dataset 130, an n-dimensional numeric vector may be generated based on the context property. For example, as shown in Fig. 6, an exemplary knowledge graph 200 exists in a two-dimensional space, but the relationships (i.e., edges 204A-F) may be translated into an n-dimensional space 600 by vectorizing the context property associated with each edge 204A-F. In the multi-dimensional space 600, the structured dataset 130 may comprise a vector store (i.e., a vector database) comprising a plurality of numerical vectors corresponding to each edge 204A-F of the plurality of edges 204A-F.

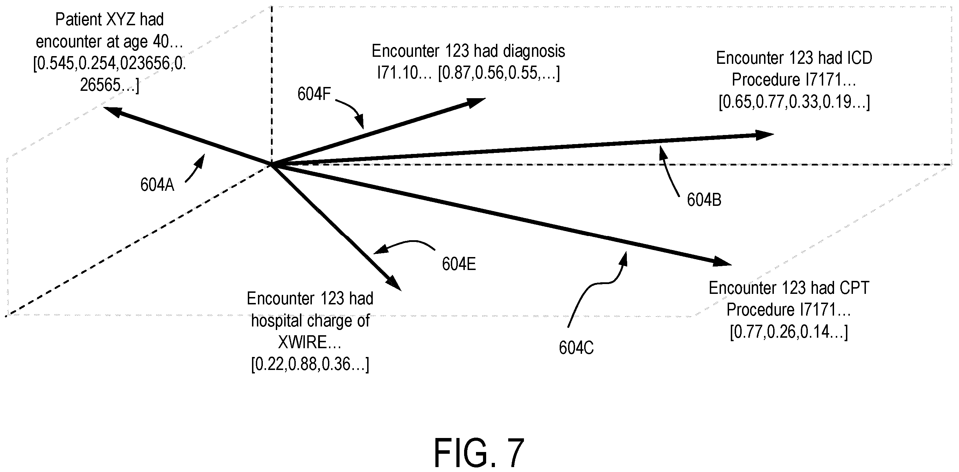

As visualized in the example of Fig. 6, the edges 204A, 204B, 204C, 204E, 204F correspond to vector space vectors 604A, 604B, 604C, 604E, 604F. In embodiments, the context properties described herein can be converted and stored in a numeric vector format through a text-embedding model. Such text-embedding models convert data (text, in this case) into a numerical vector that is represented in an n-dimensional space. As shown in the illustration of Fig. 7, the certain context properties are converted to corresponding numeric vectors and represented in a 3-dimensional space. In particular embodiments, the context properties of the present disclosure may be represented in more dimensions, such as a 1024 dimensional space. However, other dimensional spaces may be possible.

Accordingly, in embodiments of the present disclosure, every relationship in the graph 200 has a context property that contains information by encompassing the adjoining data elements and is embedded into a numerical vector by a text-embedding model and stored into a vector store. As a result, this unique way of structuring the structured database 130 enables a number of benefits and advantages over conventional means like relationship databases, including but not limited to: (i) zero loss of attributable information regarding the interaction between the nodes; (ii) captures the essence/meaning of the data elements and the information underlying it; (iii) understanding the ontology-rich and contextual description of a relationship between data entities; and (iv) users can comprehend data, discover information and insights from the database easily in natural language. In further cases, the systems and methods also assist users in exploring the dataset by guiding and suggesting additional queries.

As described herein, vector stores are specific kind of databases that can store huge length numerical vectors and are optimized for search and retrieval of the vectors. In embodiments, the structured dataset 130 may be a vector store. In other embodiments, the structured dataset 130 may include the vector store. However, in still further embodiments, a separate vector store database may be generated based on the structured database 130.

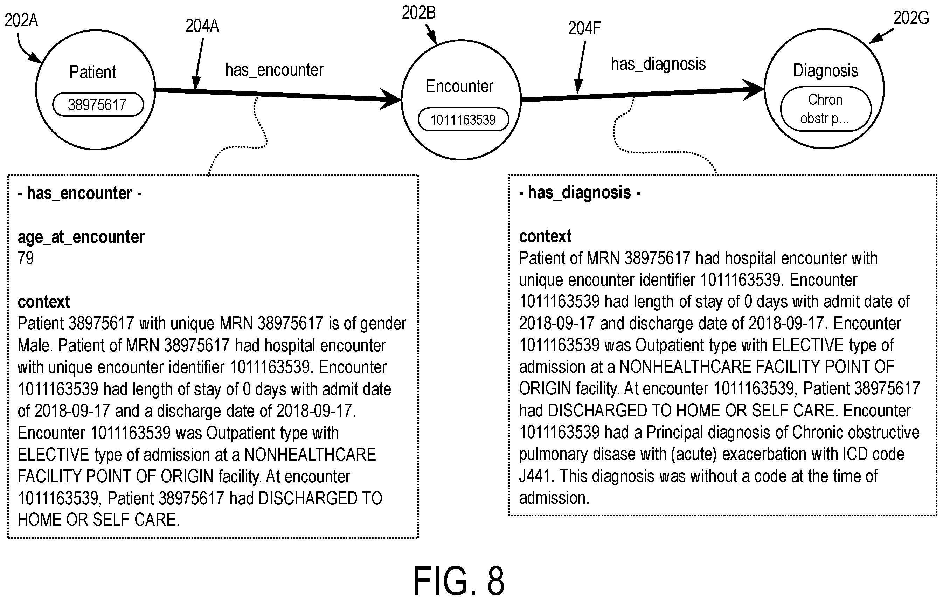

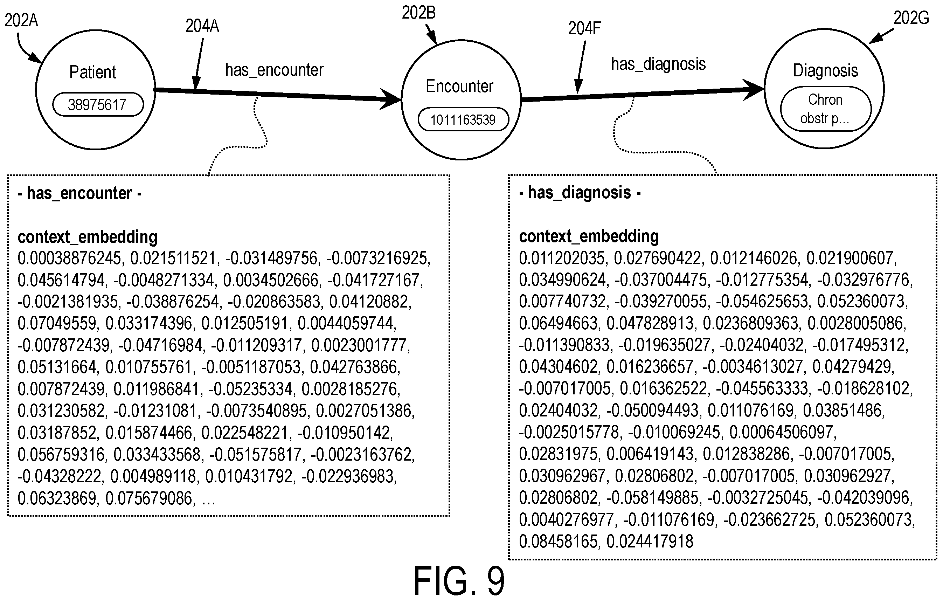

With reference to Figs. 8 and 9, the process of generating numerical vectors for contextual properties of edges is illustrated in accordance with further aspects of the present disclosure. As shown in Fig. 8, a portion of a knowledge graph 200 is shown, including a patient node 202A, an encounter node 202B, and a diagnosis node 202G. The patient node 202A and the encounter node 202B are connected by the edge 204A defining the relationship 'has_encounter'. Similarly, the encounter node 202B and the diagnosis node 202G are connected by the edge 204F defining the relationship 'has_diagnosis'. The edge 204A has the edge property 'age_at_encounter', and both edges 204A, 204F have the additional edge context property 'context'. The context properties as shown are initially generated and/or stored as a natural language representation of a combination of the node properties of the connected nodes. However, as shown in Fig. 9, the context properties can be embedded into a numerical vector by a text-embedding model.

In embodiments, the embedded numerical vector may be kept as an additional edge property 'context_embedding', rather than simply replacing the natural language context property 'context'. In particular embodiments, the edge context property 'context_embedding' can be a numerical vector of 1024 dimension, representing the context property, stored in a vector store (sometimes called as vector database). In order to be able to search, query and retrieve the numerical vectors, a vector index for the each 'context_embedding' can be added to the vector database. Vector indexes allow for querying these numerical vectors via a similarity search. In embodiments, vector indexes can be added for all types of relationships for their corresponding context property.

In embodiments, the context retrieval tools 122A, 122B may then use the vector indexes to retrieve the most relevant results to the natural language query posed by the user 105. In particular, the selected context retrieval tool 122A, 122B of the available tools 122A, 122B can be configured to use the vector indexes to retrieve the *k* most similar documents from the structured dataset 130, where *k* is some integer greater than 0.

In embodiments, in order to retrieve the most similar or relevant context from the vector store, the user's natural language query is converted into a numerical vector by the orchestration module 110 and/or the tools layer 120. The user's natural language query may be converted into a numerical vector using the same text embedding model used to generate the 'context_embedding' vectors. The selected context retrieval tool 122A, 122B then uses the vector index to query the vector store. In embodiments, the vector index returns the most relevant results based on the similarity (e.g., cosine similarity) of the numerical vectors. In some embodiments, the vector search may be coupled with a keyword search to further improve the search results.

An exemplary code snippet of a context retrieval tool 122A, 122B that retrieves context is shown in the table below:

**Table 7. Context Retrieval Tool Code Snippet**

| |
|---|
| ``` relationship_context_retrieval = Neo4jVector.from_existing_relationship_index ( BedrockEmbeddings(), url=url, username=username, password=password, index_name=relationship_vector_index, context_property="context", ) relationship_context_retrieval.similarity_search("How many hospital visits did patient MRN 22424 have?") Result >> [Document(page_content='Patient MRN 22424 had 5 encounters')] ``` |

In embodiments, the context retrieval tool 122A, 122B retrieves the top *k* results (k is a parameter representing a number) which are the most similar and relevant to the user's query. The parameter *k* can be 10, 20, 50 or any number. In embodiments, the parameter *k* may be set statically or dynamically, may be predetermined by the user 105 or the system 100, and/or may be adjusted on the fly by the user 105 or the system 100.

According to further aspects of the present disclosure, the system 100 may employ a hybrid retrieval-augmented-generation (RAG) approach to the retrieval of contextual data relevant to the user's question, which may be further used to derive a final response to the user's question. In particular embodiments, this hybrid RAG approach involves generating and providing a knowledge graph version of the contextual data relevant to the user's query, which can be provided along with the summarized results.

That is, according to certain aspects of the present disclosure, the retrieval tool 122A, 122B may also generate a knowledge graph for the natural language query based on at least the results retrieved. In embodiments, the knowledge graph generated for the user's query may include the nodes 202A-G and edges 204A-F for the explicit results. However, in some embodiments, the knowledge graph generated for the user's query may include additional interconnections between the retrieved results set, even if those nodes 202A-G and edges 204A-F are not explicitly used to answer the user's query.

In specific embodiments, generating a knowledge graph version of the contextual data may involve capturing the cypher queries while retrieving the contextual data or deriving relevant cypher queries from the contextual data, or both. For capturing the cypher queries while retrieving the contextual data, the '*graphCypherQAChain*' operation from Neo4j may be extended to collect the intermediate graph session objects. These intermediate session objects can be processed further to collect all the knowledge graph parameters (nodes and relationships). In some cases, these parameters can be empty. To overcome this, an approach that parses the intermediate session objects and modifies the relevant cypher queries whenever the derived knowledge graph parameters are empty can be implemented.

In embodiments, pre-defined cypher query templates can be used for deriving the cypher queries from the contextual data. For example, a template could be as follows:

**Table 8. Cypher Query Template Example**

| |
|---|
| Tool_name: { 'context_variable': ['encounter'], |
| 'node_variables': ['patient','encounter'], |
| 'relationship_variables': ['has_encounter'], |
| 'raw_query': "'match ({}:Patient)-[{}:has_encounter]-({}:Encounter) where {}.context = '{}' return {}'", |
| }, |
| ... |

Accordingly, the hybrid RAG approach described herein involves generating a knowledge graph for every user question. Thus, for example, different queries (e.g., "how many patients are there in this dataset?", "why diabetic patients are prone to heart-related issues?", "get me patients with encounters who had ICD procedures related to the removal of pacemaker leads", etc.) will each have different knowledge graphs specific to the query.

Once the results are retrieved and the knowledge graph is generated, the tools layer 120 will return the results and the knowledge graph to the orchestration module 110. In embodiments, the results include the most relevant embedded natural language context properties. The orchestration module 110 can then analyze the context and generate a final response using the LLM-powered agent 112.

The orchestration module 110 may then provide the final response to the user's natural language query along with the knowledge graph generated for that specific query. In embodiments, the system 100 may include a user device 140 that can be used to provide the final response to the user's natural language query along with the knowledge graph generated for that specific query.

Accordingly, when a user 105 submits a natural language query to the system 100, the system 100 generates a final response to the user's question, and collects the supporting context, i.e., relevant top *k* contexts which are relationships edges from the graph database. The system 100 then further displays those relationships in a graphical visual that mirror the backend graph database 130.

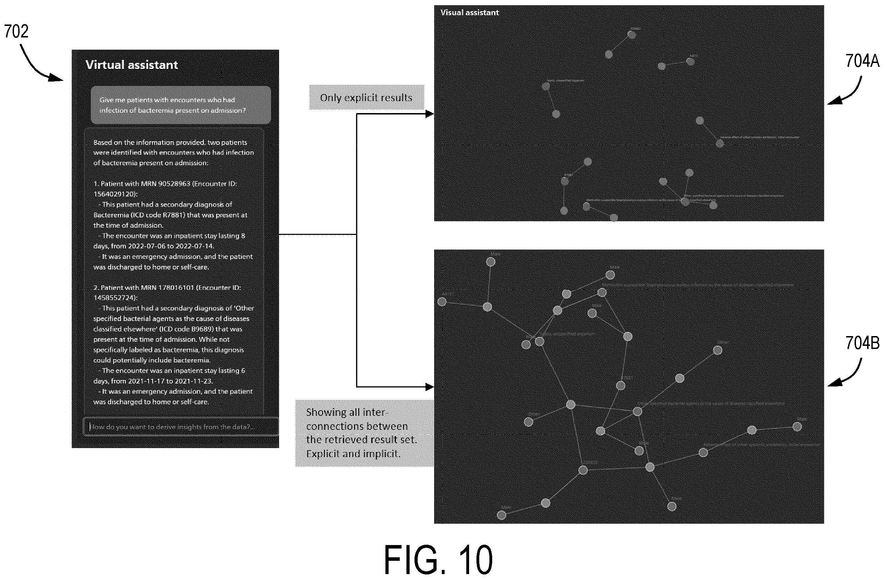

For example, with reference to Fig. 10, an exemplary output from the orchestration module 110 is shown, which was generated in response to the natural language query "Give me patients with encounters who had infection of bacteremia present on admission?". As shown, the final answer 702 is displayed on a graphical user interface (left side) and the corroborating relationships 704A, 704B are displayed on the right-hand side of the user interface, thereby visually presenting the node names - Patient, Encounter, etc. and the relationship labels such as has encounter and has diagnosis. Since this reflects the underlying backend database schema/model, users can better phrase their prompts using the same keywords.

Put another way, the system 100 presents the final answer (left) and the corroborating facts (i.e., results from the database) along with their node and relationship labels concurrently, which allows the user 105 to prompt, i.e., ask questions using the same keywords and labels which are used in database, and thereby become better at prompting.

Furthermore, as noted above, hallucination is unavoidable while invoking generative AI models. In many cases, users cannot determine how accurate the responses from the LLM are without also simultaneously knowing the ground truth, which requires domain expertise and the technical capabilities of examining underlying datasets. However, according to the present disclosure, the system 100 provides the final LLM-generated response along with its corroborating facts presented side-by-side. As a result, users can readily determine the accuracy of the response generated, which reduces / minimizes the impact of hallucinations within the answer.

As also shown in Fig. 10, it is possible to enable lay users to explore vast and complex datasets that they would other be unable to engage. For example, without the knowledge of the entire data schema/model, the user is limited to asking basic questions and receives only the primary result of their query. This is not helpful for learning or exploring the connections within the dataset. Thus, according to certain aspects of the present disclosure, while the system 100 generates the final response pertaining to the user question, the system 100 may also collect the supporting context, i.e., relevant top *k* contexts, which are relationships from the graph database. Here, after collecting those relationships, the system 100 may then write a specific Cypher query that finds additional paths among the nodes of the retrieved relationships.

Thus, according to various aspects of the present disclosure, the system 100 can provide a graphical visual of the query response along with the underlying data schema/model (in the form of the knowledge graph), which informs the user 105 how to better prompt the dataset using the correct keywords and database terminology. As shown in Fig. 10, the visual knowledge graph 704A, 704B may be displayed as a graph, but may also be provided in other forms, such as textually. Because the structured dataset 130 is modeled as graphs with edges that embedded numerical vectors corresponding to natural language context synthesized from different node properties, the system 100 can easily and efficiently store and query these structures to gain deeper insights into the interconnected nature of the data, leading to more informed decisions and innovative solutions that might not be apparent otherwise.

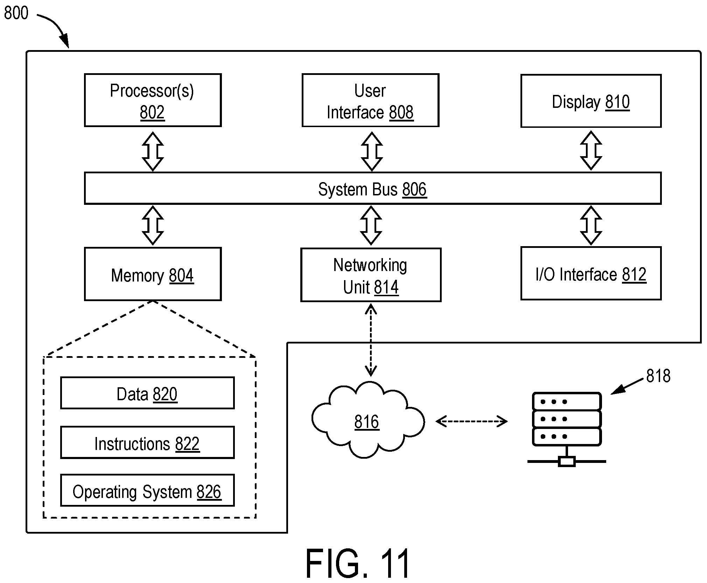

As described herein, the orchestration module 110, the tools layer 120, and the user device 140 may be implemented using one or more computing devices. For example, with reference to Fig. 11, an exemplary computing device 800 is illustrated in accordance with aspects of the present disclosure. As shown, the computing device 800 can include one or more processors 802 and a computer-readable memory 804 interconnected and/or in communication via a system bus 806 containing conductive circuit pathways through which instructions (e.g., machine-readable signals) may travel to effectuate communication, tasks, storage, and the like. The computing device 800 can be connected to a power source (not shown), which can include an internal power supply and/or an external power supply. In embodiments, the computing device 800 can also include one or more additional components, such as a user interface 808, a display 810, an input/output (I/O) interface 812, a networking unit 814, and the like, including combinations thereof. As shown, each of these components may be interconnected and/or in communication via the system bus 806, for example.

In embodiments, the one or more processors 802 can include one or more high-speed data processors adequate to execute the program components described herein and/or perform one or more operations of the methods described herein. The one or more processors 802 may include a microprocessor, a multi-core processor, a multithreaded processor, an ultra-low voltage processor, an embedded processor, and/or the like, including combinations thereof. The one or more processors 802 can include multiple processor cores on a single die and/or may be a part of a system on a chip (SoC) in which the processor 802 and other components are formed into a single integrated circuit, or a single package. That is, the one or more processors 802 may be a single processor, multiple independent processors, or multiple processor cores on a single die.

In embodiments, the user interface 808 may be configured to receive various forms of input from a user 105 associated with the computing device 800. The user interface 808 can include, but is not limited to, one or more of a keyboard, keypad, trackpad, trackball(s), capacitive keyboard, controller (e.g., a gaming controller), computer mouse, computer stylus / pen, a voice input device, and/or the like, including combinations thereof.

In embodiments, the display device 810 may be configured to display information, including text, graphs, and/or charts showing trends, and/or the like. In particular embodiments, the display device 810 may be configured to display a graphical user interface comprising contextual results 702 and knowledge graphs 704A, 704B. The display device 810 can include, but is not limited to, a liquid crystal display (LCD), a light-emitting diode (LED) display, a touch screen or other touch-enabled display, a foldable display, a projection display, and so on, or combinations thereof.

In embodiments, the input/output (I/O) interface 812 may be configured to connect and/or enable communication with one or more peripheral devices (not shown), including but not limited to additional machine-readable memory devices, diagnostic equipment, and other attachable devices. The I/O interface 812 may include one or more I/O ports that provide a physical connection to the one or more peripheral devices. In some embodiments, the I/O interface 812 may include one or more serial ports.

In embodiments, the networking unit 814 may include one or more types of networking interfaces that facilitate wired and/or wireless communication between the computing device 800 and one or more external devices. That is, the networking unit 814 may operatively connect the computing device 800 to one or more types of communications networks 816, which can include a direction interconnection, the Internet, a local area network ("LAN"), a metropolitan area network ("MAN"), a wide area network ("WAN"), a wired or Ethernet connection, a wireless connection, a cellular network, and similar types of communications networks, including combinations thereof. In some embodiments, the computing device 800 may communicate with one or more other computing devices, one or more remote / cloud-based servers and/or cloud-based services, such as remote server 818, via the communications network 816.

In embodiments, the memory 804 can be variously embodied in one or more forms of machine accessible and machine-readable memory. In some embodiments, the memory 804 includes a storage device (not shown), which can include, but is not limited to, a non-transitory storage medium, a magnetic disk storage, an optical disk storage, an array of storage devices, a solid-state memory device, and/or the like, as well as combinations thereof. The memory 804 may also include one or more other types of memory, such as dynamic random-access memory (DRAM), static random-access memory (SRAM), erasable programmable read-only memory (EPROM), electrically erasable programmable read-only memory (EEPROM), Flash memory, and/or the like, as well as combinations thereof. In embodiments, the memory 804 may include one or more types of transitory and/or non-transitory memory.

The computing device 800 can be configured by software components stored in the memory 804 to perform one or more processes of the methods described herein.

For example, in the case of the orchestration module 110, the memory 804 can be configured to store data / information 820 and computer-readable instructions 822 that, when executed by the one or more processors 802, causes the computing device 800 to: (i) receive one or more natural language queries from the user 105; (ii) select a context retrieval tool 122A, 122B from among available context retrieval tools 122A, 122B; (iii) receive results from the selected context retrieval tool 122A, 122B containing records from a structured database 130; and (iv) assess and synthesize a natural language response to the natural language query from the user 105 based on the received results. Such data 820 and the computer-readable instructions 822 stored in the memory 804 may form an orchestration module 110 that may be incorporated into, loaded from, loaded onto, or otherwise operatively available to and from the computing device 800. As described above, the orchestration module 110 can include one or more LLM-powered agents 112 and/or an instruction prompt 114. In some embodiments, the orchestration agent and/or one or more individual software packages may be stored in a local storage device of the memory 804. However, in other embodiments, the orchestration agent and/or one or more individual software packages may be loaded onto and/or updated from a remote server or service, such as server 818, via the communications network 816.

Further, in the case of the tools layer 120, the memory 804 can be configured to store data / information 820 and computer-readable instructions 822 that, when executed by the one or more processors 802, causes the computing device 800 to: (i) receive the natural language query from the orchestration module 110; (ii) access, search, and retrieve records from the structured dataset 130; (iii) generate a knowledge graph specific to the natural language query received from the user 105; and (iv) return the records and the knowledge graph to the orchestration module 110. Such data 820 and the computer-readable instructions 822 stored in the memory 804 may form one or more, or a plurality of, available context retrieval tools 122A, 122B, each of which may be incorporated into, loaded from, loaded onto, or otherwise operatively available to and from the computing device 800. Thus, in some embodiments, the available context retrieval tools 122A, 122B and/or one or more individual software packages may be stored in a local storage device of the memory 804. However, in other embodiments, the available context retrieval tools 122A, 122B and/or one or more individual software packages may be loaded onto and/or updated from a remote server or service, such as server 818, via the communications network 816.

The computing device 800 may also include an operating system component 826, which may be stored in the memory 804. The operating system component 826 may be an executable program facilitating the operation of the computing device 800. Typically, the operating system component 826 can facilitate access of the I/O interface 812, network interface 814, the user interface 808, and the display 810, and can communicate or control other components of the computing device 800.

In particular embodiments, the server 818 shown in Fig. 11 can be configured to store the structured dataset 130 and to support access to the structured dataset 130 by the context retrieval tools 122A, 122B. The server 818 can include a combination of high-performance hardware and specialized software to ensure efficient data storage, retrieval, and management of the structured dataset 130. In embodiments, the server 818 can include one or more processors (e.g., like processors 802), including but not limited to multi-core processors (e.g., at least 16 cores) like an Intel Xeon or AMD EPYC. The server 818 can also include a significant amount of memory (e.g., like memory 804), including combinations of RAM, PMEM, and one or more solid state drives. The server 818 may also include a high-speed networking unit (e.g., like networking unit 814) to enable high-speed data transfer between the server 818 and one or more other computing devices 800. The server 818 may further include an operating system (e.g., like operating system 826) as well as a database management system (DBMS) software, such as MySQL or PostgresSQL, may be used, or DBMS software specialized for graph databases like Neo4j may be used.

As described herein, the structured dataset 130 may be hosted on a single server 818, or may be hosted using multiple servers 818. Various server 818 configurations are known in the art. For example, the structured dataset 130 may be hosted on one or more remote, cloud-based servers 818. However, in specific embodiments, it is contemplated that structured dataset 130 may be hosted using an on-premises server 818 (i.e., locally, not in the cloud).

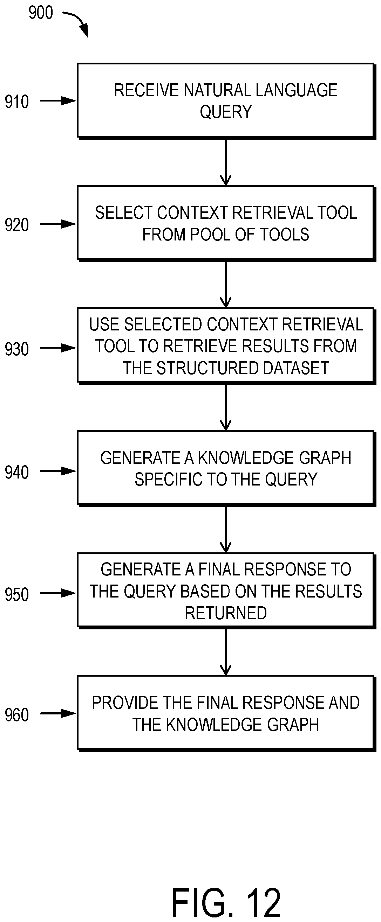

Also provided herein are methods of storing and retrieving information from a structured dataset 130. For example, with reference to Fig. 12, a method of storing and retrieving information from a structured dataset is illustrated in accordance with certain aspects of the present disclosure. As shown, the method 900 can include: in a step 910, receiving a natural language query; in a step 920, selecting a context retrieval tool from a pool of available tools; in a step 930, using the selected context retrieval tool to retrieve results from the structured dataset; in a step 940, generating a knowledge graph specific to the natural language query; in a step 950, generating a final response to the query based on the results returned; and in a step 960, providing the final response and the knowledge graph to a user.

More specifically, the method 900 can include, in the step 910, receiving, at an orchestrator module 110, a natural language query concerning the structured dataset 130. As described above, the orchestrator module 110 can include an LLM-powered agent 112 and an instruction prompt 114.

As described herein, the structured dataset 130 can be an ontology-oriented graph database comprising a plurality of nodes 202A-G and a plurality of edges 204A-F. In preferable embodiments, a context property can be generated for each edge 204A-F based on the node properties of two connected nodes 202A-G, where the context property is embedded in each respective edge 204A-F. Each context property of a particular edge 204A-F is a natural language representation of a combination of the node properties of the two nodes 202A-G connected by the particular edge 204A-F. In further embodiments, each of the context properties may be converted into a numerical vector that is embedded in an n-dimensional space (e.g., a 1024 dimensional space). In still further embodiments, vector indexes may be generated and stored in a vector store, as described above.

In the step 920, the method 900 can then include using the orchestrator module 110 to select a context retrieval tool 122A, 122B from a pool of available context retrieval tools 122A, 122B. As described above, the orchestrator module 110 may select most appropriate context retrieval tool 122A, 122B based on an assessment of the natural language query. The orchestrator module 110 may also utilize the instruction prompt 114 and/or tool description files to determine which tool 122A, 122B is most suitable for the given query.

In the step 930, the method 900 can then include using the selected context retrieval tool 122A, 122B to retrieve one or more, or a plurality of, results from the structured dataset 130 based on the natural language query. In particular embodiments, the selected context retrieval tool 122A, 122B may convert the natural language query into a numerical vector using the same or a similar text embedding model that was used on the context properties. In certain embodiments, the selected context retrieval tool 122A, 122B may use the vector indexes and the vector representation of the natural language query to retrieve the *k* most similar documents from the structured dataset 130, where *k* is some integer greater than 0.

According to the step 940, the selected context retrieval tool 122A, 122B may also generate a knowledge graph specific to the user's query. For example, the selected context retrieval tool 122A, 122B may employ a hybrid RAG approach as described above.

Next, in the step 950, the method 900 includes generating a final response to the natural language query based on the results retrieved from the selected context retrieval tool 122A, 122B. In embodiments, the final response may be generated using an LLM-powered agent 112 of the orchestrator module 110. In embodiments, the final response is a natural language response (i.e., human-readable).

Then, in the step 960, the method 900 can include providing the final response to the natural language query and the knowledge graph generated for the natural language query concurrently via a user device 140. Thus, according to the present disclosure, the method 900 includes providing the final LLM-generated response along with its corroborating facts (i.e., the knowledge graph) presented side-by-side. By providing this combination of information, a number of technical challenges are addressed and improved upon. For example, users can readily determine the accuracy of the response generated, which reduces / minimizes the impact of hallucinations within the answer. This approach also allows the user 105 to ask questions using the same keywords and labels which are used in database, and thereby become better at prompting. Furthermore, the method 900 enable lay users to explore vast and complex datasets that they would other be unable to engage.

Regarding the method 900, certain operations are described as being performed by particular devices or modules, such as the orchestration module 110, the context retrieval tools layer 120, and the user device 140. As described above, while one or more of these components 110, 120, 140 may be implemented on the same computing device (e.g., computing device 800), each of these components 110, 120, 140 may also be embodied as different computing devices (e.g., computing device 800). In such embodiments, the method 900 will naturally include communicating information between the different components 110, 120, 140. Put another way, the method 900 may include one or more additional steps involving transmitting and receiving information between each of the components 110, 120, 130, 140.

For example, as shown in Fig. 1, each of the circled numbers represent the communication of certain information between devices. In particular, "1" indicates communicating a natural language query to the orchestration module 110, which may come from the 105 via the user device 140, for example. At "2", the orchestration module 110 communicates which tool 122A, 122B should be used by the tool layer 120 and provides the natural language query to the appropriate tool 122A, 122B. At "3", the tool layer 120 communicates the search parameters to the structured dataset 130 (e.g., the server 818 hosting the ontology-oriented graph database). At "4", the structured dataset 130 / server 818 communicating the certain results to the tool layer 120 based on the search parameters. At "5", the tool layer 120 communicates the results of the user's query as well as a knowledge graph generated at the tool layer 120 to the orchestration module 110. Then, at "6", a final response to the user's query (generated at the orchestration module 110) as well as the knowledge graph (generated at the tool layer 120) are communicated to the user 105 via the user device 140.

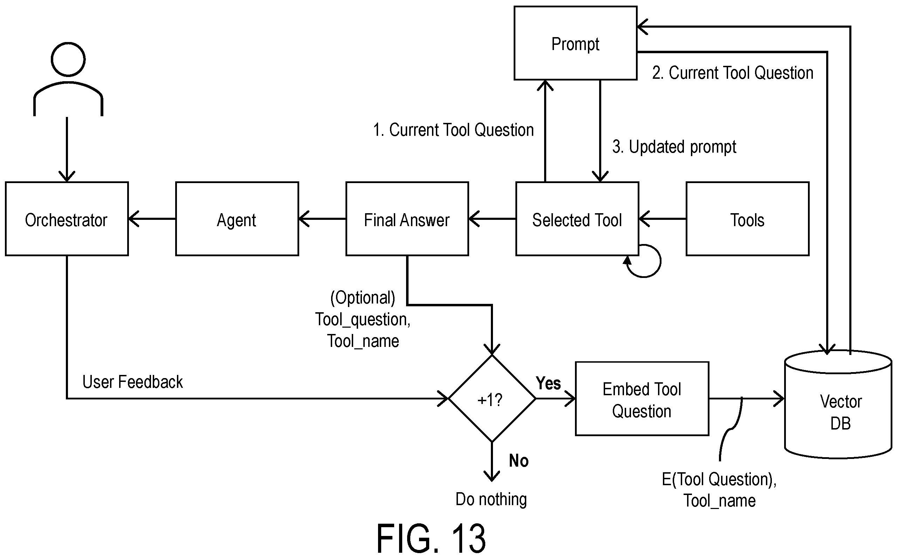

In accordance with further aspects of the present disclosure, the systems 100 and methods 900 described herein may use feedback from its user to improve on its responses. For example, in some embodiments, user(s) 105 may provide feedback on the final response generated by the orchestration module 110 to identify high-quality question/answer pairs at the tool-level by parsing the agent's intermediate steps. In particular, as shown in Fig. 13, the prompt (e.g., instruction prompt 114) can be dynamically updated by selecting the most relevant few-shot examples. In another embodiment, a positive communication between the agent and its tool responses coupled with positive user feedback can be used to identify high-quality question/answer pairs for a particular tool, which can then be used to update the vector database (Vector DB).

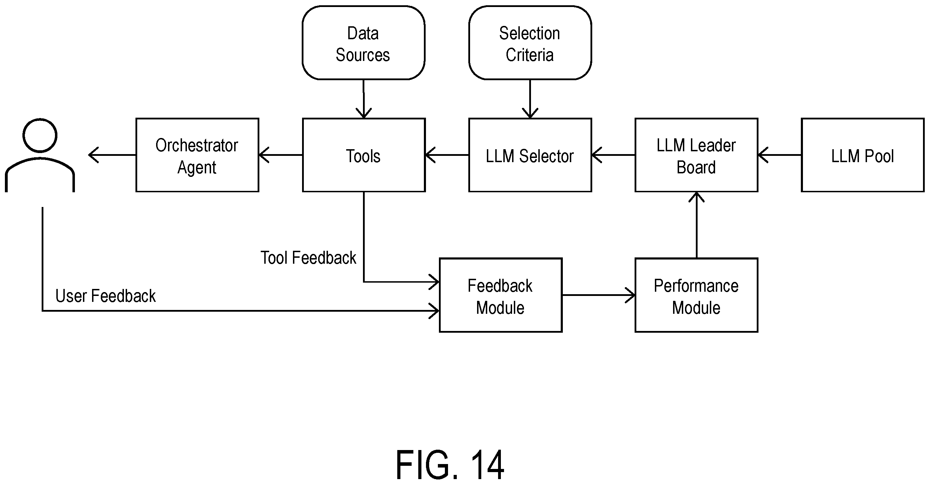

With reference to Fig. 14, a high-level overview of the proposed approach applied to the systems 100 and methods 900 described herein is illustrated. As shown, usage-driven model selection is utilized using reinforcement learning algorithms powered by user feedback. The feedback module collects the feedback from user (or tool, if available). In a typical scenario using the systems 100 of the present disclosure, the system 100 breaks down a natural language query into multiple tasks, and each task is performed by a specific tool. These specific tools selects an LLM from a pool of LMMs to perform the given task. If the user feedback is positive, then we consider that the set of tools deployed in answering the user question have performed their tasks correctly. In other words, the response from the LLMs used by each tool in this set is correct. This is used to track the performance of LLMs with different tools.

In some embodiments, an upper confidence bound can be used as selection criteria for choosing the best performing LLMs. In another embodiment, a different selection criteria (e.g. epsilon greedy) or a different choice of reinforcement learning algorithm could be used.

In particular embodiments, user feedback may be collected and used to build a reward. This reward is fed into the reinforcement learning algorithm. Based on the distribution of these rewards, the algorithm selects the best performing LLM. The reward function could be a simple inverse relationship to the cost and time taken. In another embodiment, it could involve a complex function based on, but not limited to, accuracy metrics, responsible AI metrics, cost metrics and time taken metrics, and/or the like. Notably, the user feedback can be augmented by tool feedback.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning most consistent with the particular concepts disclosed herein.

All definitions, as defined and used herein, should be understood to control over dictionary definitions, definitions in documents incorporated by reference, and/or ordinary meanings of the defined terms.

The terms "individual", "patient", and "subject" are used herein synonymously and interchangeably unless otherwise specified explicitly or implicitly by the context of its use. In various examples, these terms may refer to a human person, but can also refer to a non-human animal.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

As used herein, although the terms first, second, third, etc. may be used herein to describe various elements or components, these elements or components should not be limited by these terms. These terms are only used to distinguish one element or component from another element or component. Thus, a first element or component discussed below could be termed a second element or component without departing from the teachings of the inventive concept.

Unless otherwise noted, when an element or component is said to be "connected to," "coupled to," or "adjacent to" another element or component, it will be understood that the element or component can be directly connected or coupled to the other element or component, or intervening elements or components may be present. That is, these and similar terms encompass cases where one or more intermediate elements or components may be employed to connect two elements or components. However, when an element or component is said to be "directly connected" to another element or component, this encompasses only cases where the two elements or components are connected to each other without any intermediate or intervening elements or components.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

It should also be understood that, unless clearly indicated to the contrary, in any methods claimed herein that include more than one step or act, the order of the steps or acts of the method is not necessarily limited to the order in which the steps or acts of the method are recited.

The above-described examples of the described subject matter can be implemented in any of numerous ways. For example, some aspects can be implemented using hardware, software or a combination thereof. When any aspect is implemented at least in part in software, the software code can be executed on any suitable processor or collection of processors, whether provided in a single device or computer or distributed among multiple devices/computers.

The present disclosure can be implemented as a system, a method, and/or a computer program product at any possible technical detail level of integration. The computer program product can include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium comprises the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, comprising an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, comprising a local area network (LAN) or a wide area network (WAN), or the connection can be made to an external computer (for example, through the Internet using an Internet Service Provider). In some examples, electronic circuitry comprising, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to examples of the disclosure. It will be understood that each block of the flowchart illustrations and/or block diagrams, and combinations of blocks in the flowchart illustrations and/or block diagrams, can be implemented by computer readable program instructions.

The computer readable program instructions can be provided to a processor of a, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture comprising instructions which implement aspects of the function/act specified in the flowchart and/or block diagram or blocks.

The computer readable program instructions can also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various examples of the present disclosure. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Other implementations are within the scope of the following claims and other claims to which the applicant can be entitled.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A system (100) for querying a structured data source, the system comprising one or more processors (802) adapted to:
receive, at an orchestrator module (110) comprising a large language model (LLM)-powered agent (112) and an instruction prompt (114), a natural language query concerning a structured dataset (130);
select, by the orchestrator module (110), a context retrieval tool (122A, 122B) from available context retrieval tools (122A, 122B), the context retrieval tool (122A, 122B) adapted to be used on the structured dataset (130) and further adapted to carry out the natural language query and the instruction prompt (114);
retrieve, using the selected context retrieval tool (122A, 122B), results from the structured dataset (130) based on the natural language query;
generate, using the selected context retrieval tool (122A, 122B), a knowledge graph for the natural language query based on the structured dataset (130) and the results retrieved from the structured dataset (130);
generate, using the LLM-powered agent (112), a response to the natural language query based on the results retrieved for the natural language query; and
provide, via a user device (140), the response to the natural language query and the knowledge graph generated for the natural language query.

2. The system (100) of claim 1, wherein the structured dataset (130) is a graph database comprising:
a plurality of nodes (202), the nodes (202) representing a predetermined data element for the structured dataset (130); and
a plurality of edges (204) relating at least some nodes of the plurality of nodes (202), wherein the edges (204) connect at least two nodes of the plurality of nodes (202) and define a relationship type between the two nodes.

3. The system (100) of any one of claims 1 or 2, wherein the predetermined data element for a given node comprises one or more node properties,
wherein the edges (204) between two connected nodes comprises a context property that embeds the node properties of the two connected nodes, and
wherein the context property is a natural language representation of the node properties of the two connected nodes.

4. The system (100) of claim 3, wherein the structured dataset (130) is a vector database and the context property of the plurality of edges (204) is stored in the vector database as a numeric vector, and
wherein the structured dataset further comprises a vector index for each context property of the plurality of edges (204).

5. The system (100) of any one of previous claims, wherein the selected context retrieval tool retrieves the results from the structured dataset (130) by:
converting the natural language query into a numeric vector query;
comparing the numeric vector query to the vector indexes of the structured dataset (130); and
returning context properties corresponding to the *k* most similar vector indexes, wherein *k* is an integer greater than 0.

6. The system (100) of any one of the previous claims, wherein the knowledge graph generated for the natural language query includes a network of nodes and edges identified while retrieving the results from the structured dataset (130).

7. The system (100) of claim 1, wherein at least one of:
the knowledge graph is provided via the user device in a human-readable text-based format; and/or
the knowledge graph is provided via the user device in a human-readable graphical format.

8. The system (100) of any one of the previous claims, wherein the response to the natural language query and the knowledge graph generated for the natural language query are provided concurrently.

9. A data storage and retrieval system (100A) , comprising:
one or more processors (802) for configuring an ontology-oriented graph database (130), the ontology-oriented graph database (130) comprising:
a plurality of nodes (202), each node of the plurality of nodes (202) representing a predetermined data element for a given structured dataset, wherein each node of the plurality of nodes (202) comprises one or more node properties;
a plurality of edges (204) connecting each node of the plurality of nodes (202), wherein each edge of the plurality of edges (204) connects at least two nodes of the plurality of nodes (202) and defines a relationship type between the at least two nodes;
wherein each edge between the at least two connected nodes comprises a context property that embeds the one or more node properties of the at least two connected nodes, the context property being a natural language representation of the node properties of the at least two connected nodes.

10. The data storage and retrieval system (100) of claim 9, wherein the ontology-oriented graph database (130) is a vector database, and wherein the context property of each edge of the plurality of edges (204) is stored in vector database as a numeric vector.

11. The data storage and retrieval system (100) of any one of claims 9 or 10, wherein the ontology-oriented graph database (130) further comprises a vector index for each context property of each edge of the plurality of edges (204).

12. A computer-implemented method (900) of storing and retrieving information from a structured dataset, the method (900) comprising:
receiving (910), at an orchestrator module comprising a large language model (LLM)-powered agent and an instruction prompt, a natural language query concerning the structured dataset;
selecting (920), by the orchestrator module, a context retrieval tool from available context retrieval tools, the context retrieval tool adapted to be used on the structured dataset based on the natural language query and adapted carry out the instruction prompt;
retrieving (930), using the selected context retrieval tool, results from the structured dataset based on the natural language query;
generating (940), using the selected context retrieval tool, a knowledge graph for the natural language query based on the structured dataset and the results retrieved from the structured dataset;
generating (950), using the LLM-powered agent at the orchestrator module, a response to the natural language query based on the results retrieved for the natural language query; and providing (960), via a user device, the response to the natural language query and the knowledge graph generated for the natural language query.

13. The method (900) of claim 12, wherein the structured dataset (130) is an ontology-oriented graph database, the ontology-oriented graph database comprising:
a plurality of nodes (202), the nodes (202) representing a data element from the structured dataset (130), wherein each node of the plurality of nodes (202) comprises one or more node properties;
a plurality of edges (204) relating at least some nodes of the plurality of nodes (202), wherein the edges (204) connect at least two nodes of the plurality of nodes (202) and defines a relationship type between the two nodes;
wherein the edges (204) between two connected nodes comprise a context property that embeds the one or more node properties of the two connected nodes, the context property being a natural language representation of the node properties of the two connected nodes.

14. The method (900) of claim 13, wherein the ontology-oriented graph database (130) is a vector database, and wherein the context property of each edge of the plurality of edges (204) is stored in vector database as a numeric vector.

15. A computer program product comprising instructions which, when the program is executed by a computer, cause the computer to carry out the method of any one of claims 12-14.
